# EUROPÄISCHE PATENTSCHRIFT

(11) **EP 4 221 464 B1**
(45) Veröffentlichungstag und Bekanntmachung des Hinweises auf die Patenterteilung: **06.08.2025**
(21) Anmeldenummer: 23177609.7
(22) Anmeldetag: 06.06.2016
(51) Int. Cl.: H05B 45/10

(54) **GETAKTETE SPERRWANDLERSCHALTUNG**
CLOCKED FLYBACK CONVERTER CIRCUIT
CIRCUIT CONVERTISSEUR À DÉCOUPAGE À VERROUILLAGE

(30) Priorität: 11.06.2015 DE 102015210710
(43) Veröffentlichungstag der Anmeldung: 02.08.2023
(62) Teilanmeldung aus: 16732918.4
(73) Patentinhaber: Tridonic GmbH & Co. KG, 6851 Dornbirn (AT)
(72) Erfinder: Mitterbacher, Dr. Andre, 6850 Dornbirn (AT)
(74) Vertreter: Beder, Jens

(56) Entgegenhaltungen:
- EP-A1- 2 645 819
- WO-A1-2007/135454
- WO-A1-2012/167127
- DE-A1- 102011 100 012
- DE-T5- 112010 004 983
- US-A1- 2014 132 179

## Beschreibung

Die vorliegende Erfindung betrifft eine getaktete Sperrwandlerschaltung und ein Verfahren zum Steuern einer getakteten Sperrwandlerschaltung. Die Erfindung betrifft insbesondere einen getakteten Sperrwandler zum direkten Betreiben einer oder mehrerer Leuchtdioden.

Ein Sperrwandler, auch Hoch-Tiefsetzsteller (englisch "flyback converter") genannt, ist ein Gleichspannungswandler, der elektrische Energie zwischen einer Eingangs- und einer Ausgangsseite mittels eines Transformators galvanisch entkoppelt überträgt. Mit einem Sperrwandler kann eine am Eingang zugeführte Gleichspannung mit einem geringen schaltungstechnischen Aufwand in eine Gleichspannung mit einem anderen Spannungsniveau umgewandelt werden.

Aus der WO 2012/167294 Al ist eine getaktete Sperrwandlerschaltung bekannt, bei der eine Steuereinheit einen die Primärspule des Transformators an Masse angekoppelten Schalter zur Taktung des Sperrwandlers selektiv mit einer bestimmten Frequenz und Einschaltdauer einschaltet und wieder ausschaltet, wobei der durch den steuerbaren Schalter fließende Strom nach dem Ausschalten überwacht wird und ein Wiedereinschalten bei einem Nulldurchgang des Stroms erfolgt. Die WO 2012/167294 Al schlägt vor, eine solch getaktete Sperrwandlerschaltung zur direkten Speisung einer Leuchtdiode (LED) zu nutzen.

Die WO 2012/167294 Al offenbart jedoch nicht, wie bei einem direkten Betrieb einer oder mehrerer Leuchtdioden an der Sperrwandlerschaltung, insbesondere ohne eine weitere aktiv getaktete Konverterstufe, ein Dimmen oder Variieren der Abgabeleistung erfolgen kann.

Die Lichtabstrahlung einer Leuchtdiode hängt vom Stromfluss durch die Leuchtdiode ab. Zur Helligkeitssteuerung oder Helligkeitsregelung werden Leuchtdioden daher typischerweise in einem Modus betrieben, in dem der Stromfluss durch die Leuchtdiode von einem Betriebsgerät verändert wird.

Die WO 2013/092734 Al offenbart einen Konverter zur Helligkeitssteuerung (Dimmen) von Leuchtdioden mittels Pulsweitenmodulation (PWM), bei dem das Tastverhältnis in einem ersten und einem zweiten Dimmbereich mit einer ersten bzw. zweiten konstanten Amplitude des LED-Stroms verändert wird, um einen großen Gesamtdimmbereich abzudecken. Die Helligkeitssteuerung erfolgt hier lediglich nach einer Dimmvorgabe.

Für eine exakte Steuer- oder Regelung insbesondere bei unterschiedlichen Lasten müssen von der Steuereinheit Messgrößen erfasst werden, um ggf. Abweichungen von vorgegebenen Betriebsparametern, wie Lichtfarbe und Helligkeit, oder Verschiebungen im Lichtspektrum bei unterschiedlichen Dimmpegeln, entgegenwirken zu können.

Für die Erfassung der Messgrößen und das Erzeugen von entsprechenden Signalen die der Steuerschaltung zuführbar bzw. von dieser verarbeitbar sind, werden zusätzlich Bauteile/Schaltungen benötigt, was den Aufbau insgesamt komplex und teuer macht.

Die WO 2010/135454 A offenbart eine getaktete Sperrwandlerschaltung, die im diskontinuierlichen Betrieb arbeitet.

Eine getaktete Sperrwandlerschaltung gemäß dem Oberbegriff des beigefügten Anspruches 1 ist in der DE 11 2011 004983 T5 beschrieben.

Der Erfindung liegt die Aufgabe zugrunde, Vorrichtungen und Verfahren anzugeben, die die beschriebenen Probleme verringern. Aufgabe ist es insbesondere, eine getaktete Sperrwandlerschaltung für den direkten Betrieb von einem oder mehreren Leuchtmitteln und ein Verfahren zum Steuern einer Sperrwandlerschaltung bereitzustellen, die eine genaue Steuerung und Regelung über einen großen Lastbereich mit einem einfachen und kostengünstigen Aufbau erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung enthält eine getaktete Sperrwandlerschaltung zum Betreiben einer oder mehrerer Leuchtmittel einen steuerbaren Schalter, einen Transformator mit einer mit dem steuerbaren Schalter gekoppelten Primarwicklung und einer Sekundarwicklung, an welche die Leuchtmittel ankoppelbar sind, eine Steuereinheit zum Ansteuern des Schalters, und Mittel zum direkten oder indirekten Erfassen des Stroms durch den Schalter im eingeschalteten Zustand und zur Zuführung eines diesen Strom wiedergebenden Signals an die Steuereinheit. Um einen großen Last-/Dimmbereich abzudecken bzw. auch bei geringen Last-/Dimmbereichen eine genaue Steuer- oder Regelung zu ermöglichen, arbeitet die Sperrwandlerschaltung im Grenzbetrieb und bei geringen Last-/Dimmbereichen im diskontinuierlichen Betrieb.

Sobald das den Strom wiedergebende Signal nach dem Einschalten des Schalters eine zur Änderung/Einstellung der durch die Sperrwandlerschaltung zu übertragenden Leistung veränderbare Abschaltschwelle erreicht hat, schaltet die Steuereinheit den Schalter wieder aus. Die Abschaltschwelle wird von der Steuereinheit dabei jedoch nur bis zu einem vorgegebenen Minimalwert verringert und die Steuereinheit geht zur Erzielung einer weiteren Verringerung der durch die Sperrwandlerschaltung zu übertragenden Leistung vom Betrieb im Grenzmodus in den diskontinuierlichen Betrieb mit einer auf den Minimalwert fixierten Abschaltschwelle über. Die Steuereinheit ist so eingerichtet, dass sie sowohl im Grenzbetrieb als auch im diskontinuierlichen Betrieb den Schalter ausschaltet, sobald das den Strom wiedergebende Signal die Abschaltschwelle bzw. den vorgegebenen Minimalwert erreicht. Der Transformator weist eine primarseitige Hilfswicklung, an der die Steuereinheit zum Ermitteln eines Verlaufs der über die Hilfswicklung abfallenden Spannung angekoppelt ist, auf, wobei die Steuereinheit in dem diskontinuierlichen Betrieb den Schalter zu einem Zeitpunkt, an dem diese Spannung nach einem Minimum im Spannungsverlauf Null ist, wiedereinschaltet.

Das oder die Leuchtmittel können Leuchtdioden sein.

Die Steuereinheit kann einen Komparator zum Vergleichen des den Strom wiedergebenden Signals mit einem den Minimumwert repräsentierenden Signal aufweisen.

Die Steuereinheit kann so ausgebildet sein, dass die Abschaltschwelle in dem Grenzbetrieb und/oder der Zeitpunkt des Wiedereinschaltens des Schalters in dem diskontinuierlichen Betrieb entsprechend einem der Steuereinheit zugeführten Dimmsignal verändert wird.

Die Steuereinheit kann in dem diskontinuierlichen Betrieb einen Zeitpunkt für das Wiedereinschalten des Schalters entsprechend der zu übertragenden Leistung ermitteln und, wenn in einem Zyklus der Zeitpunkt, an dem die Spannung über die Hilfswicklung nach einem Minimum im Spannungsverlauf Null ist und an dem der Schalter einschaltet wurde, nach dem ermittelten Zeitpunkt liegt, den Schalter in einem nächsten Zyklus zu einem Zeitpunkt, an dem die Spannung über die Hilfswicklung nach einem Minimum im Spannungsverlauf Null ist und der vor dem ermittelten Zeitpunkt liegt, wiedereinschalten.

Alternativ oder zusätzlich kann die Steuereinheit in dem diskontinuierlichen Betrieb einen an die Leuchtmittel abgegebenen Strommittelwert auf Basis des tatsächlichen Zeitpunkts des Wiedereinschaltens des Schalters fortlaufend ermitteln und den Strommittelwert auf einen entsprechend der zu übertragenen Leistung vorgegebenen Strommittelwert durch eine Änderung des Zeitpunkts des Wiedereinschaltens regeln, wobei eine Differenz zwischen dem vorgegebenen Strommittelwert für einen Wiedereinschaltzyklus und dem tatsächlichen Strommittelwert des Wiedereinschaltzyklus gebildet und diese Differenz zu dem vorgegebenen Strommittelwert für den nächsten Wiedereinschaltzyklus addiert wird. Dabei wird der Wiedereinschaltzeitpunkt in jedem Zyklus insbesondere auf einen Nulldurchgang des Spannungsverlaufs nach einem Minimum gefragt.

Ein Betriebsgerät für Leuchtdioden gemäß der vorliegenden Erfindung weist eine der oben beschriebenen getakteten Sperrwandlerschaltungen auf.

Gemäß der vorliegenden Erfindung weist ein Verfahren zum Steuern einer einen Transformator aufweisenden getakteten Sperrwandlerschaltung, bei der eine Primarwicklung des Transformators mit einem steuerbaren Schalter und eine Sekundarwicklung des Transformators mit einem oder mehreren Leuchtmitteln gekoppelt ist, die Schritte auf: Ansteuern des Schalters; und Erfassen des durch den Schalter fließenden Stroms und Erzeugen eines diesen Strom wiedergebenden Signals; wobei sowohl im Grenzbetrieb als auch im diskontinuierlichen Betrieb der Schalter ausgeschaltet wird, wenn das Signal anzeigt, dass der Strom eine veränderbare Abschaltschwelle erreicht hat, und die Abschaltschwelle zur Veränderung der durch die Sperrwandlerschaltung zu übertragenden Leistung verändert wird, wobei die Abschaltschwelle nur bis zu einem Minimalwert verringert wird und zur Erzielung einer weiteren Verringerung der durch die Sperrwandlerschaltung zu übertragenden Leistung bei fixierter Abschaltschwelle vom Betrieb im Grenzmodus in den diskontinuierlichen Betrieb übergegangen wird.

Nachfolgend wird die Erfindung anhand der beiliegenden Zeichnungen naher erläutert. Es zeigen:
Fig. 1 eine getaktete Sperrwandlerschaltung nach einem ersten Ausführungsbeispiel gemäß der vorliegenden Erfindung.
Fig. 2 ein Diagramm mit Signalverläufen der im Grenzbetriebsmodus betriebenen Sperrwandlerschaltung nach einem Ausführungsbeispiel gemäß der vorliegenden Erfindung,
Fig. 3 ein Diagramm mit Signalverläufen der im diskontinuierlichen Betriebsmodus betriebenen Sperrwandlerschaltung nach einem Ausführungsbeispiel gemäß der vorliegenden Erfindung,
Fig. 4 ein Diagramm mit Verläufen von Steuergrößen im Grenzbetrieb und diskontinuierlichen Betrieb.
Fig. 5 eine getaktete Sperrwandlerschaltung nach einem zweiten Ausführungsbeispiel gemäß der vorliegenden Erfindung.
Fig. 6 ein Betriebsgerät für Leuchtdioden nach einem Ausführungsbeispiel gemäß der vorliegenden Erfindung.

Komponenten mit gleichen Funktionen sind in den Figuren mit gleichen Bezugszeichen gekennzeichnet.

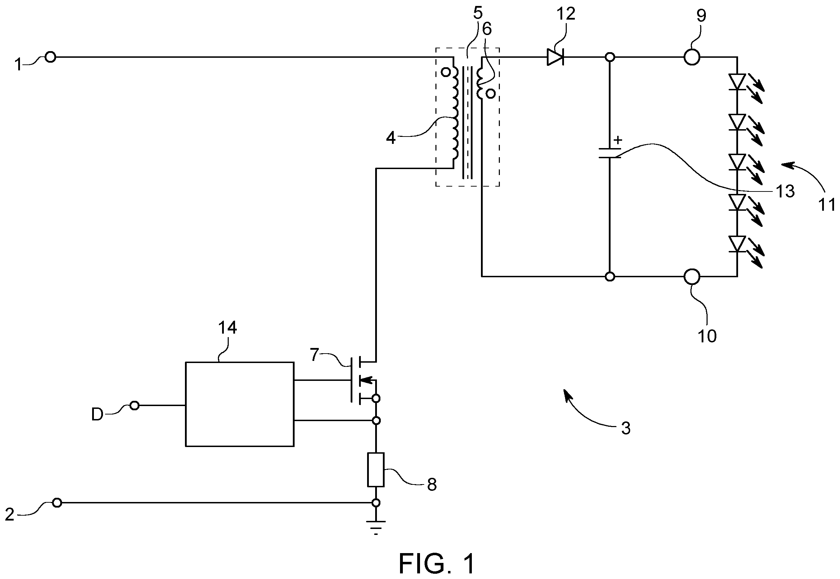

Fig. 1 zeigt eine vereinfachte Schaltung eines getakteten Sperrwandlers zum direkten Betrieb von einem oder mehreren Leuchtmitteln nach einem ersten Ausführungsbeispiel gemäß der vorliegenden Erfindung. An den zwei Eingangsanschlüssen 1, 2 der abgebildeten Sperrwandlerschaltung 3 wird eine Versorgungsspannung zugeführt, die eine Gleichspannung oder eine gleichgerichtete Wechselspannung sein kann.

Die Primarwicklung 4 des Transformators 5, der steuerbare Schalter 7 und ein Messwiderstand 8 sind in Reihe zwischen dem ersten Eingangsanschluss 1 und dem zweiten Eingangsanschluss 2 geschaltet. Der zweite Eingangsanschluss 2 ist mit Masse verbunden. An den zwei Ausgangsanschlüssen 9, 10 der Sperrwandlerschaltung 3 ist eine aus einer Reihenschaltung von im Beispiel fünf LEDs gebildete LED-Strecke 11 angeschlossen. Die Sekundarwicklung 6 des Transformators 5 und eine Diode 12 sind in Reihe zwischen dem ersten Ausgangsanschluss 9 und dem zweiten Ausgangsanschluss 10 geschaltet. Ein Kondensator 13 ist an den Ausgangsanschlüssen 9, 10 parallel angekoppelt. Primar- und Sekundarwicklung 4, 6 des Transformators 5 weisen eine unterschiedliche Polarität/Wicklungsrichtung auf.

Der steuerbare Schalter 7 kann ein Leistungsschalter, ein Feldeffekttransistor oder ein Bipolartransistor sein. Der steuerbare Schalter 7 kann ein Transistor mit isolierter Gateelektrode sein.

Eine mit dem Schalter 7 verbundene Steuereinheit 14 steuert den Schalter 7 an, um diesen ein und auszuschalten.

Der Steuereinheit 14 wird ein Dimmsignal D zur Helligkeitssteuerung der LED-Strecke 11 (Variieren der Abgabeleistung) und ein Signal der über den Messwiderstand abfallenden Spannung zum Erfassen des durch den Schalter 7 fließenden Stroms, zugeführt.

Die Steuereinheit 14 kann eine integrierte Halbleiterschaltung sein oder eine integrierte Halbleiterschaltung umfassen. Die Steuereinheit 14 kann als ein Prozessor, ein Mikroprozessor, ein Controller, ein Mikrocontroller oder eine anwendungsspezifische Spezialschaltung (ASIC, "Application Specific Integrated Circuit") oder eine Kombination der genannten Einheiten ausgestaltet sein.

Bei dem getakteten Sperrwandler 3 wird elektrische Energie zwischen den mittels des Transformators 5 galvanisch getrennten Eingangsanschlüssen 1, 2 und den Ausgangsanschlüssen 9, 10 übertragen. Hierzu schaltet die Steuereinheit 14 den Schalter 7 wiederholt ein und wieder aus. Nach dem Einschalten wird die Primarwicklung 4 des Transformators 5 von Strom durchflossen, die Diode 12 unterdruckt einen Stromfluss auf der Sekundärseite. Nach dem Ausschalten (Sperrphase) wird die in der Primarwicklung 4 gespeicherte Energie über die Sekundarwicklung 6 des Transformators 5 abgegeben bzw. erzwingt einen Stromfluss auf der Sekundärseite durch die Diode 12. Der Kondensator 13 wird geladen, die an den Ausgangsanschlüssen 9, 10 der Sperrwandlerschaltung 3 angeschlossene LED-Strecke 11 leuchtet. Der Stromfluss auf der Sekundärseite nimmt linear ab und wird im diskontinuierlichen (lückenden) Betrieb sowie im Grenzbetrieb schließlich null bevor die Steuereinheit 14 den Schalter 7 wieder einschaltet.

Gemäß der vorliegenden Erfindung erfolgt ein Dimmen bzw. ein Variieren der Abgabeleistung in einem ersten Bereich der Abgabeleistung, in dem der Sperrwandler 3 im Grenzbetrieb/-Modus betrieben wird, durch ein Variieren des Stromwertes, bis zu dem nach dem Einschalten des Schalters 7 der Strom durch die Primarwicklung 4 des Transformators 5 und dem Schalter 7 linear ansteigt. Bei Erreichen dieses vorgegebenen Stromwerts wird der Schalter 7 ausgeschaltet. Die Höhe des vorgegebenen Stromwerts bestimmt in diesem Modus die Helligkeit.

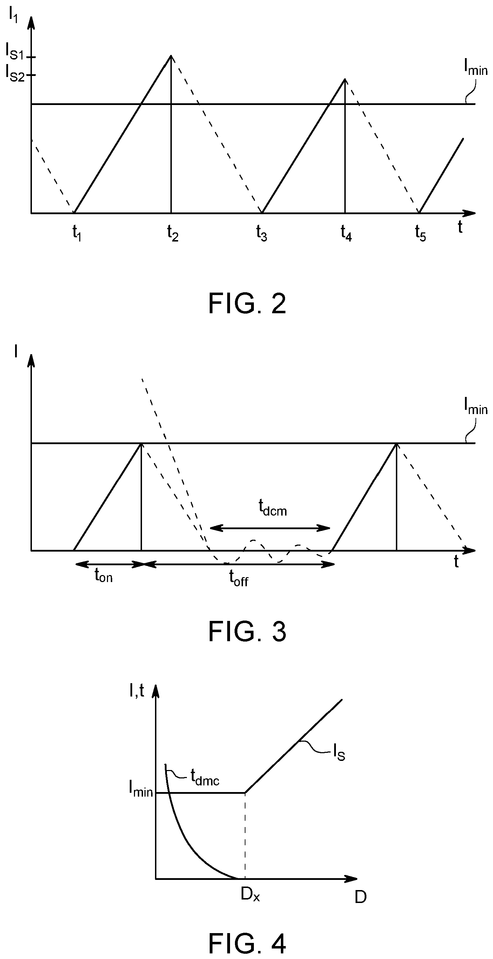

Fig. 2 zeigt in einer vereinfachten Darstellung die zeitlichen Verläufe des Stromes durch die Primarwicklung 4 und den Schalter 7 (durchgezogene Linie) und des Stromes durch die Sekundarwicklung 6 (gestrichelte Linie) des im Grenzbetriebsmodus betriebenen Sperrwandlers 3. Wie in dem Diagramm der Fig. 2 zu sehen, schaltet die Steuereinheit 14 den Schalter 7 zum Zeitpunkt t₁ ein. Der Stromfluss durch den Schalter 7 wird mittels der über den Messwiderstand 8 abfallenden und von der Steuereinheit 14 erfassten Spannung bestimmt.

Nach dem Einschalten zum Zeitpunkt t1 steigt der Strom durch die Primarwicklung 4 und den Schalter 7 (durchgezogenen Linie) bis zu einem vorgegebenen Stromwert IS1, der von der Steuereinheit 14 auf Basis des Dimmsignals D (Leistungsanforderung) gesetzt wurde, linear an.

Die Steuereinheit 14 vergleicht den aktuellen Schalterstrom bzw. die den Schalterstrom wiedergebende, an dem Widerstand 8 abfallende Spannung mit dem Schwellenwert I_{S1} und bewirkt ein Ausschalten des Schalters 7, sobald der Strom durch den Schalter 7 den Schwellenwert I_{S1} (Abschaltschwelle) erreicht.

Zum Zeitpunkt t₂ wird der vorgegebene Stromwert I_{S1} (Schwellenwert) erreicht und die Steuereinheit 14 schaltet den Schalter 7 aus. Der Stromfluss durch die Sekundarwicklung 6 (gestrichelte Linie) beginnt und sinkt zum Zeitpunkt t3 auf null ab, worauf die Steuereinheit 14 den Schalter 7 wieder einschaltet (Grenzbetrieb). Ein Wiedereinschalten kann auch erst bei einer positiven Flanke (Nulldurchgang) des Spulenstroms erfolgen.

Für den dem Zyklus t₁ bis t₃ folgenden Zyklus wurde von der Steuereinheit 14 aufgrund einer verringerten Leistungsanforderung über das Dimmsignal D der Abschaltschwellenwert auf I_{S2} abgesenkt, so dass nach dem Einschalten des Schalters 7 zum Zeitpunkt t₃ der Strom durch die Primarwicklung 4 und den Schalter 7 (durchgezogene Linie) wieder ansteigt, aber nur bis zu dem vorgegebenen Stromwert Is₂, da die Steuereinheit 14 den Schalter 7 zum Zeitpunkt t₄ ausschaltet und nach dem Absinken des Stroms durch die Sekundarwicklung 6 (gestrichelte Linie) auf null zum Zeitpunkt t₅ wieder einschaltet (Grenzbetrieb).

Gemäß der vorliegenden Erfindung erfolgt bei einer Verringerung der Leistungsanforderung ein Absenken der Abschaltschwelle nur bis zu dem in dem Diagramm der Fig. 2 gezeigten Mindestwert Iₘᵢₙ. Dieser Mindestwert Iₘᵢₙ kann so gewählt sein, dass unterhalb dieses minimalen Abschaltschwellenwerts keine sichere Erfassung/Detektion des geringen Stromflusses durch den Schalter 7 möglich ist.

Wenn bei einer Verringerung der Leistungsanforderung und einem entsprechenden Absenken der Abschaltschwelle die Abschaltschwelle unter dem Mindestwert Iₘᵢₙ liegen würde, wechselt die Steuereinheit 14 also gemäß der vorliegenden Erfindung von dem Grenzbetriebsmodus in den diskontinuierlichen Betriebsmodus. Hierzu vergleicht die Steuereinheit 14 die entsprechend dem Dimmsignal D zu setzende Abschaltschwelle IS mit dem Mindestwert Iₘᵢₙ. In dem diskontinuierlichen Betriebsmodus erfolgt dann die geforderte weitere Verringerung der von dem Sperrwandler 3 abgegebenen Leistung durch eine Verlängerung der Ausschaltzeitdauer des Schalters 7 mit auf den Mindestwert Iₘᵢₙ fixierter Abschaltschwelle.

Fig. 3 zeigt in einem Diagramm die zeitlichen Verläufe des Stromes durch die Primarwicklung 4 und den Schalter 7 (durchgezogene Linie) und des Stromes durch die Sekundarwicklung 6 (gestrichelte Linie) des im diskontinuierlichen Betriebsmodus betriebenen Sperrwandlers 3. Wie in Fig. 3 gezeigt schaltet die Steuereinheit 14 den Schalter 7 ab, sobald der durch den Schalter 7 fließende Strom (durchgezogene Linie) den Mindestwert Iₘᵢₙ, die fixierte Abschaltschwelle, erreicht hat, und schaltet den Schalter 7 nach dem Absinken des Stroms durch die Sekundarwicklung 6 (gestrichelte Linie) auf null nicht sofort wieder ein, sondern erst nach einer entsprechend der abzugebenden Leistung gesetzten Zeitdauer t_{dcm}, nachdem der Strom der Sekundarwicklung 6 (gestrichelte Linie) auf null abgefallen ist. In dem diskontinuierlichen Betriebsmodus wird der Schalter 7 immer beim Erreichen der fixierten Abschaltschwelle ausgeschaltet, eine Erhöhung der Abgabeleistung erfolgt mit einer entsprechenden Verringerung der Zeitdauer t_{dcm}, und ein Absenken der Abgabeleistung mit einer entsprechenden Erhöhung der Zeitdauer t_{dcm}.

Wenn bei einer Erhöhung der Leistungsanforderung und einer entsprechenden Verringerung der Zeitdauer t_{dcm}, diese unter einem Mindestwert oder bei null liegen würde, wechselt die Steuereinheit 14 gemäß der vorliegenden Erfindung von dem diskontinuierlichen Betriebsmodus in den Grenzbetriebsmodus. Hierzu vergleicht die Steuereinheit 14 die entsprechend dem Dimmsignal D zu setzende Zeitdauer t_{dcm} mit dem Mindestwert bzw. prüft, ob die Zeitdauer t_{dcm}, null oder nahezu null ist.

Fig. 4 verdeutlicht den Übergang zwischen den verschiedenen Betriebsmodi. In dem in Fig. 4 gezeigten Diagramm sind der von der Steuereinheit 14 zu setzende Schwellenwert Iₛ sowie die von der Steuereinheit 14 zu setzende Zeitdauer t_{dcm}, als Funktion des Pegels des der Steuereinheit 14 zugeführten Dimmsignals D dargestellt. Wie in dem in Fig. 4 gezeigten Diagramm zu sehen ist, steigt oberhalb eines Pegels D der zu setzende Abschaltschwellenwert Iₛ linear mit einer Erhöhung des Pegels des Dimmsignals D an, während die Zeitdauer t_{dcm}, null ist. Unterhalb des Pegels Dₓ ist der zu setzende Abschaltschwellenwert Iₛ konstant bzw. auf den Mindestwert Imin fixiert, während die Zeitdauer tdcm, mit einem Absenken des Pegels des Dimmsignals D unter Dₓ nichtlinear ansteigt. Die dargestellten Verläufe können von der Steuereinheit 14 berechnet werden oder in Form einer Tabelle vorab in der Steuereinheit 14 abgelegt sein.

In dem diskontinuierlichen Betrieb können nach dem Ausschalten des Schalters 7 Oszillationen der Spannung über der primärseitigen Spule 4 aufgrund von parasitären Effekten auftreten. Um Schaltverluste des Schalters 7 zu vermeiden, sollten solche Oszillationen beim Wählen des Wiedereinschaltzeitpunktes berücksichtigt werden bzw. der Wiedereinschaltzeitpunkt so gewählt werden, dass zum Wiedereinschaltzeitpunkt die Spannungsschwingung auf einen Nulldurchgang nach einem Spannungsminimum fällt.

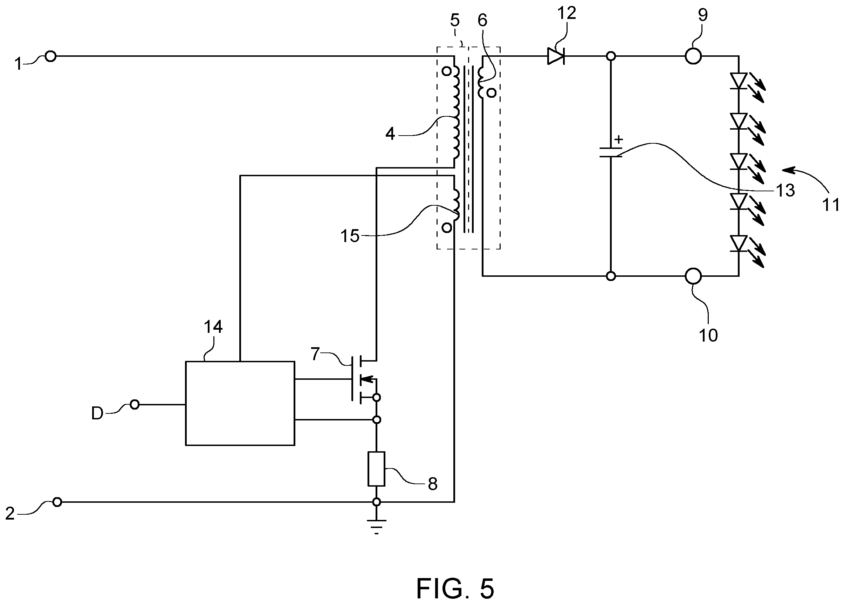

Fig. 5 zeigt eine getaktete Sperrwandlerschaltung nach einem zweiten Ausführungsbeispiel gemäß der vorliegenden Erfindung, bei der der Transformator 5 eine primarseitige Hilfswicklung 15 zum Erfassen dieses Spannungsverlaufs aufweist. Die Hilfswicklung 15 ist mit dem zweiten Eingangsanschluss 2 und der Steuereinrichtung 15 verbunden. Die Steuereinheit 14 ermittelt in dem diskontinuierlichen Betrieb mittels des von der Hilfswicklung 15 erzeugten Spannungssignals den Zeitpunkt an dem der Spannungsverlauf einen Nulldurchgang nach einem Minimum aufweist, um den Schalter zu diesem Zeitpunkt wiedereinzuschalten.

In dem in Fig. 3 gezeigten Diagramm ist die Oszillation des Spannungssignals nach dem Ausschalten als gepunktete Linie gezeigt. Soll das Wiedereinschalten des Schalters 7 unter Berücksichtigung der erfassten Oszillation erfolgen, bedeutet dies jedoch, dass das Wiedereinschalten des Schalters 5 nicht zu einem beliebigen Zeitpunkt erfolgen kann, sondern nur in diskreten Zeitabständen, nämlich immer dann, wenn die Spannungsschwingung einen Nulldurchgang hat.

Wird der Schalter 7 auf Grund dieser Spannungsschwingungen und dem sich daraus ergebenden Wiedereinschaltzeitpunkt beim Nulldurchgang nicht genau zu dem von der Steuereinheit 14 gemäß der Lastanforderung ermittelten Zeitpunkt wiedereingeschaltet, kann die vorgegebene Leistung, der vorgegebene zeitliche Mittelwert des sekundarseitig abgegebenen Stroms I_{avg}, für diesen Wiedereinschaltzyklus nicht exakt erreicht werden und fällt, wenn zum Beispiel erst zu einem nächstmöglichen diskreten Zeitpunkt später wiedereingeschaltet wird, niedriger aus.

Zur Kompensation dieses Fehlers kann die Steuereinheit 14 den Schalter 7 beim nächsten Zyklus zu einem diskreten Zeitpunkt, der vor dem gemäß der Lastanforderung ermittelten Zeitpunkt liegt, (vorfristig) wiedereinschalten, so dass sich ein vorfristiges Wiedereinschalten und ein Wiedereinschalten zu einem diskreten Zeitpunkt, der nach dem gemäß der Lastanforderung ermittelten Zeitpunkt liegt, abwechseln.

Die Steuereinheit 14 kann dazu ausgelegt sein, die Größe des Fehlers, d.h. die Abweichung zwischen dem gemäß der Lastanforderung ermittelten Zeitpunkt und den tatsächlichen Zeitpunkt des Wiedereinschaltens zu bestimmen und das vorfristige Wiedereinschalten ab einer bestimmten Größe des Fehlers auszulösen. Der Fehler kann für nur einen Wiedereinschaltzyklus bestimmt oder für mehrere Zyklen aufsummiert werden, wobei ein vorfristiges Wiedereinschalten für einen nächsten Wiedereinschaltzyklus ausgelöst wird, sobald der aufsummierte Fehler (Gesamtfehler) der aufeinanderfolgenden Zyklen einen bestimmten Wert erreicht. Alternativ oder zusätzlich kann die Steuereinheit 14 den tatsächlichen, aktuellen Strommittelwert I_{avg} auf Basis des tatsächlichen Zeitpunkts des Wiedereinschaltens fortlaufend ermitteln und den Strommittelwert I_{avg} durch eine entsprechende Anpassung/Änderung der Zeitdauer t_{dcm}, regeln, wobei eine Differenz zwischen dem vorgegebenen Strommittelwert für den letzten Wiedereinschaltzyklus und dem tatsächlichen Strommittelwert I_{avg} des letzten Wiedereinschaltzyklus gebildet und diese Differenz zu dem vorgegebenen Strommittelwert für den nächsten Wiedereinschaltzyklus addiert werden kann.

Gemäß der vorliegenden Erfindung kann ein Abwechseln von dem diskontinuierlichen Betriebsmodus und dem Grenzbetriebsmodus erfolgen, wenn die durch die LED(s) gebildete Last so niedrig ist, dass die sich bei einem Grenzbetriebsmodus ergebende obere Abschaltschwelle Iₛ unter dem vorgegeben Mindestwert Iₘᵢₙ liegen würde. Dieses Abwechseln kann insbesondere in einem Übergangsbereich zu einem genaueren Strommittelwert I_{avg} über zwei Wiedereinschaltzyklen/Perioden führen, da ein aus dem diskontinuierlichen Betriebsmodus resultierender, zu niedriger Strommittelwert I_{avg} (Wiedereinschalten bei einem nächstmöglichen diskreten, späteren Zeitpunkt) mit dem im darauffolgenden Grenzbetriebsmodus zu hohen Strommittelwert I_{avg} ausgeglichen werden kann.

Das Ende des Wechselbetriebs bzw. der Übergang vom Wechselbetrieb zu einem fortwährenden diskontinuierlichen Betriebsmodus kann mittels eines empfangenen Steuersignals ausgelöst werden oder von dem Pegel des Dimmsignals D oder der Lange des Zeitdauer t_{dcm}, des diskontinuierlichen Betriebsmodus abhängig sein, wobei ein Ende eines Wechselbetriebs bzw. der Übergang vom Wechselbetrieb zu einem fortwährenden diskontinuierlichen Betriebsmodus erfolgt, wenn die Lange einen Maximalwert annimmt.

In gleicher Weise kann ein Übergang vom einem weiteren fortwährenden diskontinuierlichen Betriebsmodus zu dem Wechselbetrieb mittels eines empfangenen Steuersignals ausgelöst werden oder von dem Pegel des Dimmsignals D oder der Länge der Zeitdauer t_{dcm} des diskontinuierlichen Betriebsmodus abhängig sein, wobei ein Start eines Wechselbetriebs bzw. der Übergang vom einem fortwährenden diskontinuierlichen Betriebsmodus zum Wechselbetrieb erfolgt, wenn die Länge einen Minimalwert annimmt. Der Minimalwert und der Maximalwert können gleich sein.

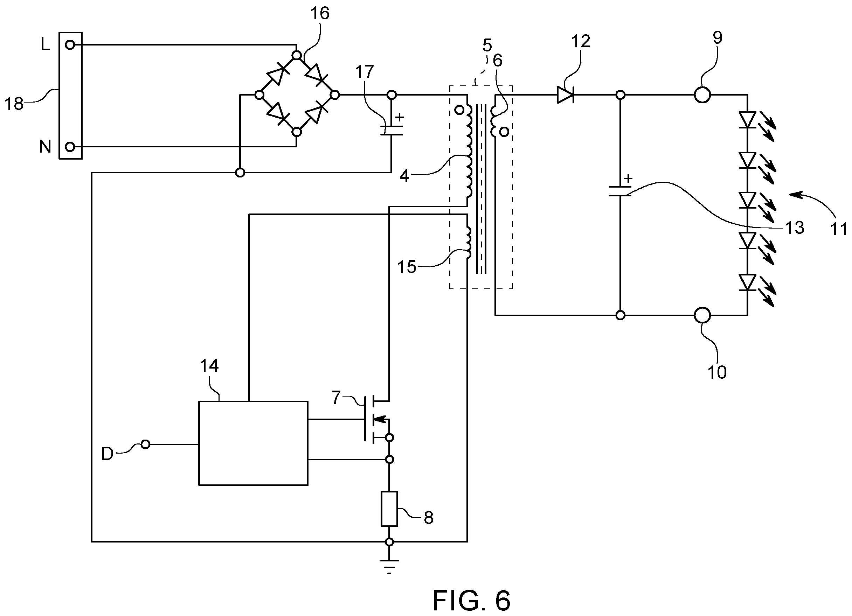

Fig. 6 zeigt ein Betriebsgerät für Leuchtdioden nach einem Ausführungsbeispiel gemäß der vorliegenden Erfindung. Das Betriebsgerät weist die in Fig. 5 gezeigte getaktete Sperrwandlerschaltung und einen aus einer Diodenschaltung 16 und einem Ladekondensator 17 bestehenden Gleichrichter für die Gleichrichtung einer an den Eingangsanschluss 18 zugeführten Wechselspannung auf. Das Betriebsgerät kann eine zwischen der Diodenschaltung 16 und dem Ladekondensator 17 angeordnete Leistungsfaktorkorrekturschaltung (nicht gezeigt) umfassen.

Die LEDs der an den Ausgangsanschlüssen 8, 10 angeschlossenen LED-Strecke 11 können anorganische oder organische LEDs sein. Die LEDs können in Serie oder parallel geschaltet sein. Die mehreren LEDs können auch in komplexeren Anordnungen verschaltet sein, beispielsweise in mehreren zueinander parallel geschalteten Reihenschaltungen. Während beispielhaft fünf LEDs dargestellt sind, kann das Leuchtmittel bzw. die LED-Strecke 11 auch mehr oder weniger LEDs aufweisen.

Das Betriebsgerät kann alternativ die in Fig. 1 gezeigte Sperrwandlerschaltung aufweisen.

## Patentansprüche

1. Getaktete Sperrwandlerschaltung zum Betreiben einer oder mehrerer Leuchtmittel (11), aufweisend
einen steuerbaren Schalter (7),
einen Transformator (5) mit einer Primärwicklung (4), welche mit dem steuerbaren Schalter (7) gekoppelt ist, und einer Sekundärwicklung (6), an welche die Leuchtmittel (11) ankoppelbar sind,
eine Steuereinheit (14) zum Ansteuern des Schalters (7), und
Mittel (8) zum direkten oder indirekten Erfassen des Stroms durch den Schalter (7) im eingeschalteten Zustand und zur Zuführung eines diesen Strom wiedergebenden Signals an die Steuereinheit (14),
**dadurch gekennzeichnet, dass**
die Steuereinheit (14) dazu ausgelegt ist, sowohl im Grenzbetrieb als auch im diskontinuierlichen Betrieb den Schalter (7) anzusteuern und auszuschalten, wenn das den Strom wiedergebende Signal eine veränderbare Abschaltschwelle (IS) erreicht hat, im Grenzbetrieb die Abschaltschwelle (IS) zur Veränderung der durch die Sperrwandlerschaltung (3) übertragenen Leistung zu verändern, und die Abschaltschwelle (IS) für das Stromsignal nur bis zu einen Minimalwert (Iₘᵢₙ) zu verringern und zur Erzielung einer weiteren Verringerung der durch die Sperrwandlerschaltung (3) übertragenen Leistung bei auf den Minimalwert (Iₘᵢₙ) fixierter Abschaltschwelle (IS) vom Grenzbetrieb in den diskontinuierlichen Betrieb zu wechseln, wobei der Steuereinheit (14) ein Dimmsignal (D) zuführbar ist und die Steuereinheit (14) eingerichtet ist, in dem Grenzbetrieb die Abschaltschwelle (I_{S}) entsprechend dem Dimmsignal zu ändern und in dem diskontinuierlichen Betrieb den Zeitpunkt des Wiedereinschaltens des Schalters entsprechend dem Dimmsignal (D) bei auf den Minimalwert (Iₘᵢₙ) fixierter Abschaltschwelle (I_{S}) zu ändern, und wobei der Transformator (5) eine primärseitige Hilfswicklung (15), an der die Steuereinheit (14) zum Erfassen eines Spannungsverlaufs über die Hilfswicklung (15) angekoppelt ist, aufweist, und
die Steuereinheit (14) in dem diskontinuierlichen Betrieb den Schalter zu einem Zeitpunkt, an dem ein Spannungssignal des über die Hilfswicklung (15) erzeugten Spannungsverlaufs nach einem Minimum im Spannungsverlauf Null ist, wiedereinschaltet.

2. Getaktete Sperrwandlerschaltung nach Anspruch 1, wobei
die Steuereinheit (14) dazu ausgelegt ist, im diskontinuierlichen Betrieb die Zeitdauer (t_{dcm}) zwischen einem Zeitpunkt, an dem der Strom der Sekundärwicklung (6) auf null abgesunken ist und dem Zeitpunkt des Wiedereinschaltens des Schalters (7) zur Veränderung der durch die Sperrwandlerschaltung (3) übertragenen Leistung zu verändern, die Zeitdauer (t_{dcm}) nur bis zu einer Minimal-Zeitdauer zu verringern und zur Erzielung einer weiteren Erhöhung der durch die Sperrwandlerschaltung (3) übertragenen Leistung vom diskontinuierlichen Betrieb in den Grenzbetrieb zu wechseln.

3. Getaktete Sperrwandlerschaltung nach einem der Ansprüche 1 bis 2, wobei
die Steuereinheit (14) einen Komparator zum Vergleichen des den Strom wiedergebenden Signals mit einem den Minimalwert (Iₘᵢₙ) repräsentierenden Signal aufweist.

4. Getaktete Sperrwandlerschaltung nach einem der Ansprüche 1 bis 3, wobei
die Steuereinheit (14) eingerichtet ist, in dem diskontinuierlichen Betrieb einen Zeitpunkt für das Wiedereinschalten des Schalters (7) entsprechend der zu übertragenen Leistung zu ermitteln und, wenn in einem Zyklus der Zeitpunkt, an dem die Spannung über der Hilfswicklung (15) nach einem Minimum im Spannungsverlauf Null ist und an dem der Schalter (7) einschaltet wurde, nach diesem ermittelten Zeitpunkt liegt, den Schalter (7) in einem nächsten Zyklus zu einem Zeitpunkt, an dem die Spannung über der Hilfswicklung (15) nach einem Minimum im Spannungsverlauf Null ist und der vor dem ermittelten Zeitpunkt liegt, wiedereinschaltet.

5. Getaktete Sperrwandlerschaltung nach einem der Ansprüche 1 bis 4, wobei
die Steuereinheit (14) eingerichtet ist, in dem diskontinuierlichen Betrieb einen an die Leuchtmittel (11) abgegebenen Strommittelwert auf Basis eines tatsächlichen Zeitpunkts des Wiedereinschaltens des Schalters (7) fortlaufend zu ermitteln und den Strommittelwert auf einen entsprechend der zu übertragenen Leistung vorgegebenen Strommittelwert durch eine Änderung des Zeitpunkts des Wiedereinschaltens zu regeln, wobei eine Differenz zwischen dem vorgegebenen Strommittelwert für einen Wiedereinschaltzyklus und dem tatsächlichen Strommittelwert des Wiedereinschaltzyklus gebildet und diese Differenz zu dem vorgegebenen Strommittelwert für den nächsten Wiedereinschaltzyklus addiert wird.

6. Betriebsgerät für Leuchtdioden, aufweisend eine getaktete Sperrwandlerschaltung (3) nach einem der Ansprüche 1 bis 5.

7. Verfahren zum Steuern einer einen Transformator (5) aufweisenden getakteten Sperrwandlerschaltung (3), bei der eine Primärwicklung (4) des Transformators mit einem steuerbaren Schalter (3) und eine Sekundärwicklung (2) des Transformators (5) mit einem oder mehreren Leuchtmitteln (11) gekoppelt ist, mit den Schritten:
Ansteuern des Schalters (7); und
Erfassen des durch den Schalter (7) fließenden Stroms und Erzeugen eines diesen Strom wiedergebenden Signals;
**dadurch gekennzeichnet, dass**
sowohl im Grenzbetrieb als auch im diskontinuierlichen Betrieb der Schalter (7) ausgeschaltet wird, wenn das Signal anzeigt, dass der Strom eine veränderbare Abschaltschwelle (I_{S}) erreicht hat, und
im Grenzbetrieb die Abschaltschwelle (I_{S}) zur Veränderung der durch die Sperrwandlerschaltung (3) zu übertragenden Leistung verändert wird, wobei
die Abschaltschwelle (I_{S}) nur bis zu einem Minimalwert (Iₘᵢₙ) verringert wird und zur Erzielung einer weiteren Verringerung der durch die Sperrwandlerschaltung (3) zu übertragenden Leistung bei auf den Minimalwert (Iₘᵢₙ) fixierter Abschaltschwelle (I_{S}) vom Grenzbetrieb in den diskontinuierlichen Betrieb übergegangen wird, wobei
der Steuereinheit (14) ein Dimmsignal (D) zugeführt wird und durch die Steuereinheit (14) in dem Grenzbetrieb die Abschaltschwelle (I_{S}) entsprechend dem Dimmsignal geändert wird und in dem diskontinuierlichen Betrieb den Zeitpunkt des Wiedereinschaltens des Schalters entsprechend dem Dimmsignal (D) bei auf den Minimalwert (Iₘᵢₙ) fixierter Abschaltschwelle (I_{S}) geändert wird, und wobei über eine primärseitige Hilfswicklung (15) des Transformators (5) die Steuereinheit (14) zum Erfassen eines Spannungsverlaufs über die Hilfswicklung (15) angekoppelt wird, und
die Steuereinheit (14) in dem diskontinuierlichen Betrieb den Schalter zu einem Zeitpunkt, an dem ein Spannungssignal des über die Hilfswicklung (15) erzeugten Spannungsverlaufs nach einem Minimum im Spannungsverlauf Null ist, wiedereinschaltet.

## Claims

1. Clocked flyback converter circuit for operating one or more lamps (11), comprising
a controllable switch (7),
a transformer (5) having a primary winding (4) coupled to the controllable switch (7) and a secondary winding (6) to which the lamps (11) can be coupled,
a control unit (14) for actuating the switch (7), and
means (8) for directly or indirectly detecting the current through the switch (7) in the switched-on state and for supplying a signal representing this current to the control unit (14),
**characterized in that**
the control unit (14) is configured to actuate and switch off the switch (7) in limit operation and in discontinuous operation when the signal representing the current has reached a variable switch-off threshold (IS), to modify the switch-off threshold (IS) in limit operation in order to modify the power transmitted by the flyback converter circuit (3), to reduce the switch-off threshold (IS) for the current signal only to a minimum value (Iₘᵢₙ), and to change from limit operation into discontinuous operation in order to achieve a further reduction of the power transmitted by the flyback converter circuit (3) when the switch-off threshold (IS) is fixed at the minimum value (Iₘᵢₙ), wherein a dimming signal (D) can be supplied to the control unit (14), and the control unit (14) is designed, in limit operation, to modify the switch-off threshold (Is) according to the dimming signal, and, in discontinuous operation, to modify the time of switching the switch back on according to the dimming signal (D) when the switch-off threshold (I_{S}) is fixed at the minimum value (Iₘᵢₙ), and wherein the transformer (5) has a primary-side auxiliary winding (15) to which the control unit (14) is coupled in order to detect a voltage curve across the auxiliary winding (15), and
in discontinuous operation, the control unit (14) switches the switch back on at a time at which a voltage signal of the voltage curve generated across the auxiliary winding (15) is zero after a minimum in the voltage curve.

2. Clocked flyback converter circuit according to claim 1, wherein
the control unit (14) is configured, in discontinuous operation, to modify the duration (t_{dcm}) between a time at which the current of the secondary winding (6) has dropped to zero and the time of switching the switch (7) back on in order to modify the power transmitted by the flyback converter circuit (3), to reduce the duration (t_{dcm}) only to a minimum duration, and to change from discontinuous operation to limit operation in order to achieve a further increase of the power transmitted by the flyback converter circuit (3).

3. Clocked flyback converter circuit according to either of claims 1 to 2, wherein the control unit (14) has a comparator for comparing the signal representing the current with a signal representing the minimum value (Iₘᵢₙ).

4. Clocked flyback converter circuit according to any of claims 1 to 3, wherein the control unit (14) is configured, in discontinuous operation, to determine a time for switching the switch (7) back on according to the power to be transmitted, and if, in a cycle, the time at which the voltage across the auxiliary winding (15) is zero after a minimum in the voltage curve and at which the switch (7) has been switched on is after this determined time, the switch (7) is switched back on in a subsequent cycle at a time at which the voltage across the auxiliary winding (15) is zero after a minimum in the voltage curve and which is before the determined time.

5. Clocked flyback converter circuit according to any of claims 1 to 4,
wherein the control unit (14) is configured, in discontinuous operation, to continuously determine a mean current value that is output to the lamp (11), on the basis of an actual time of switching the switch (7) back on, and to control the mean current value with respect to a mean current value specified according to the power to be transmitted, by modifying the time of switching back on, wherein a difference is formed between the specified mean current value for a cycle of switching back on and the actual mean current value of the cycle of switching back on, and this difference is added to the specified mean current value for the subsequent cycle of switching back on.

6. Operating device for light-emitting diodes, comprising a clocked flyback converter circuit (3) according to any of claims 1 to 5.

7. Method for controlling a clocked flyback converter circuit (3) comprising a transformer (5) in which a primary winding (4) of the transformer is coupled to a controllable switch (3), and a secondary winding (2) of the transformer (5) is coupled to one or more lamps (11), comprising the steps of:
actuating the switch (7); and
detecting the current flowing through the switch (7) and generating a signal representing this current;
**characterized in that**
in limit operation and in discontinuous operation, the switch (7) is switched off when the signal indicates that the current has reached a variable switch-off threshold (Is), and
in limit operation, the switch-off threshold (I_{S}) is modified in order to modify the power to be transmitted by the flyback converter circuit (3), wherein the switch-off threshold (I_{S}) is reduced only to a minimum value (Iₘᵢₙ) and is transitioned from limit operation into discontinuous operation in order to achieve a further reduction of the power to be transmitted by the flyback converter circuit (3) when the switch-off threshold (I_{S}) is fixed at the minimum value (Iₘᵢₙ), wherein
a dimming signal (D) is supplied to the control unit (14) and, in limit operation, the switch-off threshold (Is) is modified by the control unit (14) according to the dimming signal, and, in discontinuous operation, the time of switching the switch back on is modified according to the dimming signal (D) when the switch-off threshold (Is) is fixed at the minimum value (Iₘᵢₙ), and wherein the control unit (14) is coupled via a primary-side auxiliary winding (15) of the transformer (5) in order to detect a voltage curve across the auxiliary winding (15), and
in discontinuous operation, the control unit (14) switches the switch back on at a time at which a voltage signal of the voltage curve generated across the auxiliary winding (15) is zero after a minimum in the voltage curve.

## Revendications

1. Circuit convertisseur à transfert indirect cadencé permettant de faire fonctionner un ou plusieurs moyens lumineux (11), présentant
un commutateur (7) pouvant être commandé,
un transformateur (5) comportant un enroulement primaire (4), lequel est couplé au commutateur (7) pouvant être commandé, et un enroulement secondaire (6) auquel les moyens lumineux (11) peuvent être couplés,
une unité de commande (14) pour la commande du commutateur (7), et des moyens (8) pour la détection directe ou indirecte du courant traversant le commutateur (7) à l'état activé et pour la fourniture d'un signal reproduisant ledit courant à l'unité de commande (14),
**caractérisé en ce que,**
l'unité de commande (14) est configurée pour, aussi bien en fonctionnement limite qu'en fonctionnement discontinu, commander et désactiver le commutateur (7) lorsque le signal reproduisant le courant a atteint un seuil de coupure (IS) modifiable, en fonctionnement limite, modifier le seuil de coupure (IS) pour la modification de la puissance transmise par le circuit convertisseur à transfert indirect (3), et réduire le seuil de coupure (IS) pour le signal de courant uniquement jusqu'à une valeur minimale (Iₘᵢₙ) et passer du fonctionnement limite au fonctionnement discontinu pour atteindre une réduction supplémentaire de la puissance transmise par le circuit convertisseur à transfert indirect (3) lorsque le seuil de coupure (IS) est fixé à la valeur minimale (Iₘᵢₙ), dans lequel un signal de variation (D) peut être fourni à l'unité de commande (14) et l'unité de commande (14) est configurée, en fonctionnement limite, pour modifier le seuil de coupure (Is) en fonction du signal de variation et, en fonctionnement discontinu, pour modifier l'instant de la réactivation du commutateur en fonction du signal de variation (D) lorsque le seuil de coupure (Is) est fixé à la valeur minimale (Iₘᵢₙ), et dans lequel le transformateur (5) présente un enroulement auxiliaire (15) côté primaire auquel est couplée l'unité de commande (14) pour la détection d'une courbe de tension sur l'enroulement auxiliaire (15), et
l'unité de commande (14), en fonctionnement discontinu, réactive le commutateur jusqu'à un instant où un signal de tension de la courbe de tension générée sur l'enroulement auxiliaire (15) est nul après un minimum dans la courbe de tension.

2. Circuit convertisseur à transfert indirect cadencé selon la revendication 1, dans lequel
l'unité de commande (14) est configurée, en fonctionnement discontinu, pour modifier la durée (t_{dcm}) entre un instant où le courant de l'enroulement secondaire (6) a chuté à zéro, et l'instant de la réactivation du commutateur (7) pour la modification de la puissance transmise par le circuit convertisseur à transfert indirect (3), réduire la durée (t_{dcm}) uniquement jusqu'à une durée minimale, et passer du fonctionnement discontinu au fonctionnement limite pour atteindre une augmentation supplémentaire de la puissance transmise par le circuit convertisseur à transfert indirect (3).

3. Circuit convertisseur à transfert indirect cadencé selon l'une des revendications 1 à 2, dans lequel l'unité de commande (14) présente un comparateur permettant la comparaison du signal reproduisant le courant avec un signal représentatif de la valeur minimale (Iₘᵢₙ).

4. Circuit convertisseur à transfert indirect cadencé selon l'une des revendications 1 à 3, dans lequel l'unité de commande (14) est configurée, en fonctionnement discontinu, pour déterminer un instant pour la réactivation du commutateur (7) en fonction de la puissance à transmettre et, lorsque, dans un cycle, l'instant où la tension sur l'enroulement auxiliaire (15) est nulle après un minimum dans la courbe de tension et où le commutateur (7) a été activé, se trouve après ledit instant déterminé, pour réactiver le commutateur (7) dans un cycle suivant jusqu'à un instant où la tension sur l'enroulement auxiliaire (15) est nulle après un minimum dans la courbe de tension et qui se trouve avant l'instant déterminé.

5. Circuit convertisseur à transfert indirect cadencé selon l'une des revendications 1 à 4, dans lequel l'unité de commande (14) est configurée, en fonctionnement discontinu, pour déterminer en continu une valeur moyenne de courant délivrée aux moyens lumineux (11) sur la base d'un instant effectif de la réactivation du commutateur (7) et pour réguler la valeur moyenne de courant sur une valeur moyenne de courant prédéfinie en fonction de la puissance à transmettre par une modification de l'instant de la réactivation, dans lequel une différence entre la valeur moyenne de tension prédéfinie pour un cycle de réactivation et la valeur moyenne de courant effective du cycle de réactivation est formée et ladite différence est ajoutée à la valeur moyenne de courant prédéfinie pour le cycle de réactivation suivant.

6. Appareil de fonctionnement pour des diodes électroluminescentes, présentant un circuit convertisseur à transfert indirect (3) cadencé selon l'une des revendications 1 à 5.

7. Procédé pour la commande d'un circuit convertisseur à transfert indirect (3) cadencé présentant un transformateur (5), circuit convertisseur à transfert indirect dans lequel un enroulement primaire (4) du transformateur est couplé à un commutateur (3) pouvant être commandé et un enroulement secondaire (2) du transformateur (5) est couplé à un ou plusieurs moyens lumineux (11), comportant les étapes consistant à :
commander le commutateur (7) ; et
détecter le courant circulant à travers le commutateur (7) et générer un signal reproduisant ledit courant ;
**caractérisé en ce que,**
aussi bien en fonctionnement limite qu'en fonctionnement discontinu, le commutateur (7) est désactivé lorsque le signal indique que le courant a atteint un seuil de coupure (Is) modifiable, et
en fonctionnement limite, le seuil de coupure (Is) est modifié pour la modification de la puissance à transmettre par le circuit convertisseur à transfert indirect (3), dans lequel le seuil de coupure (Is) est réduit uniquement jusqu'à une valeur minimale (Iₘᵢₙ) et, pour atteindre une réduction supplémentaire de la puissance à transmettre par le circuit convertisseur à transfert indirect (3), lorsque le seuil de coupure (Is) est fixé à la valeur minimale (Iₘᵢₙ), on passe du fonctionnement limite au fonctionnement discontinu, dans lequel
un signal de variation (D) est fourni à l'unité de commande (14) et, par l'unité de commande (14), en fonctionnement limite, le seuil de coupure (Is) est modifié en fonction du signal de variation et, en fonctionnement discontinu, l'instant de la réactivation du commutateur est modifié en fonction du signal de variation (D) lorsqu'un seuil de coupure (Is) fixé à la valeur minimale (Iₘᵢₙ), et dans lequel l'unité de commande (14) est couplée par l'intermédiaire d'un enroulement auxiliaire (15) côté primaire du transformateur (5) pour la détection d'une courbe de tension sur l'enroulement auxiliaire (15), et
l'unité de commande (14), en fonctionnement discontinu, réactive le commutateur jusqu'à un instant où un signal de tension de la courbe de tension générée sur l'enroulement auxiliaire (15) est nul après un minimum dans la courbe de tension.
